# EUROPEAN PATENT APPLICATION

(11) **EP 4 701 311 A1**
(43) Date of publication of application: **25.02.2026**
(21) Application number: 24806507.0
(22) Date of filing: 11.05.2024
(51) Int. Cl.: H04W 72/25

(54) **COMMUNICATION METHOD AND COMMUNICATION APPARATUS**

(30) Priority: 12.05.2023 CN 202310541338
(71) Applicant: Huawei Technologies Co., Ltd., Shenzhen, Guangdong 518129 (CN)
(72) Inventor: LI, Xiangyu, Shenzhen, Guangdong 518129 (CN); PENG, Wenjie, Shenzhen, Guangdong 518129 (CN); KUANG, Yiru, Shenzhen, Guangdong 518129 (CN)
(74) Representative: Epping - Hermann - Fischer
(86) International application number: PCT/CN2024/092599
(87) International publication number: WO 2024/235155

(57) **Abstract**

This application provides a communication method and a communication apparatus. The method may be applied to a first terminal device. The method includes: sending first information to a network device, where the first information includes an identifier of a second terminal device, and the identifier of the second terminal device corresponds to a first index; sending second information to the network device, where the second information includes the identifier of the second terminal device, and the identifier of the second terminal device corresponds to a second index; updating the first index corresponding to a first sidelink configuration to the second index; and performing sidelink communication with the second terminal device based on a second sidelink configuration, where the second sidelink configuration corresponds to the second index. The index corresponding to the identifier of the second terminal device is updated, so that the first terminal device can apply the sidelink configuration corresponding to the updated index, thereby ensuring reliability of the sidelink communication between the first terminal device and the second terminal device.

## Description

This application claims priority to Chinese Patent Application No. 202310541338.7, filed with the China National Intellectual Property Administration on May 12, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In a communication system, terminal devices may directly communicate with each other without a network device. Data transmitted between the terminal devices may be referred to as sidelink (sidelink, SL) data. To reliably transmit the SL data, a transmit-end terminal device needs to obtain an SL configuration for transmitting the SL data.

In an existing solution, the terminal device may report, to a base station, an identifier of at least one receive end that transmits the SL data. An identifier of each receive end in the identifier of the at least one receive end corresponds to one index. Subsequently, the base station may send SL configurations corresponding to one or more indexes to the terminal device. How the terminal device flexibly applies the SL configurations corresponding to the one or more indexes to improve reliability of sidelink communication is a problem that needs to be resolved.

### SUMMARY

This application provides a communication method and a communication apparatus, to improve reliability of sidelink communication between terminal devices.

According to a first aspect, a communication method is provided. The method may be implemented by a first terminal device or a component (for example, a processor or a chip) in the first terminal device. The method includes: sending first information to a network device, where the first information includes an identifier of a second terminal device, and the identifier of the second terminal device corresponds to a first index; sending second information to the network device, where the second information includes the identifier of the second terminal device, and the identifier of the second terminal device corresponds to a second index; updating the first index corresponding to a first sidelink configuration to the second index; and performing sidelink communication with the second terminal device based on a second sidelink configuration, where the second sidelink configuration corresponds to the second index.

Based on this technical solution, the index corresponding to the identifier of the second terminal device is updated, so that the first terminal device can apply the sidelink configuration corresponding to the updated index (the second index), to improve reliability of the sidelink communication between the first terminal device and the second terminal device.

In some implementations, it is determined, based on a timestamp of the second sidelink configuration and a first moment, to perform the sidelink communication with the second terminal device based on the second sidelink configuration, where the first moment is a moment at which the second information is generated or sent.

In some implementations, if a moment corresponding to the timestamp of the second sidelink configuration is later than the first moment, the sidelink communication is performed with the second terminal device based on the second sidelink configuration.

In some implementations, when the first sidelink configuration is different from the second sidelink configuration, the second sidelink configuration is sent to the second terminal device.

In some implementations, the sidelink configuration includes a sidelink measurement configuration or a sidelink discontinuous reception DRX configuration.

According to a second aspect, a communication method is provided. The method may be implemented by a first terminal device or a component (for example, a processor or a chip) in the first terminal device. The method includes: sending first information to a network device, where the first information includes an identifier of a second terminal device, and the identifier of the second terminal device corresponds to a first index; sending second information to the network device, where the second information includes the identifier of the second terminal device, and the identifier of the second terminal device corresponds to a second index; and determining, based on the identifier of the second terminal device, a first sidelink configuration, and a second sidelink configuration, to perform sidelink communication with the second terminal device based on the second sidelink configuration, where the first sidelink configuration corresponds to the first index, and the second sidelink configuration corresponds to the second index.

Based on this technical solution, the first terminal device can apply, based on the identifier of the second terminal device, the first sidelink configuration, and the second sidelink configuration, the sidelink configuration corresponding to the updated index, to improve reliability of the sidelink communication between the first terminal device and the second terminal device.

In some implementations, it is determined, based on the second index included in second configuration information and the second information, that an identifier of a terminal device corresponding to the second index is the identifier of the second terminal device; the first index is determined based on the determined identifier of the second terminal device and the first information; and the first sidelink configuration is updated to the second sidelink configuration based on the first index, and the sidelink communication is performed with the second terminal device based on the second sidelink.

In some implementations, it is determined, based on a timestamp of the second sidelink configuration and a first moment, to perform the sidelink communication with the second terminal device based on the second sidelink configuration, where the first moment is a moment at which the second information is generated or sent.

In some implementations, if a moment corresponding to the timestamp of the second sidelink configuration is later than the first moment, the sidelink communication is performed with the second terminal device based on the second sidelink configuration.

In some implementations, when the first sidelink configuration is different from the second sidelink configuration, the second sidelink configuration is sent to the second terminal device.

In some implementations, the sidelink configuration includes a sidelink measurement configuration or a sidelink discontinuous reception DRX configuration.

According to a third aspect, a communication method is provided. The method may be implemented by a first terminal device or a component (for example, a processor or a chip) in the first terminal device. The method includes: sending first information to a network device, where the first information includes an identifier of a second terminal device, and the identifier of the second terminal device corresponds to a first index; sending second information to the network device, where the second information includes the identifier of the second terminal device, and the identifier of the second terminal device corresponds to a second index; releasing a first sidelink configuration, where the first sidelink configuration corresponds to the first index; and performing sidelink communication with the second terminal device based on a second sidelink configuration, where the second sidelink configuration corresponds to the second index.

Based on this technical solution, the first sidelink configuration is released, so that the first terminal device can apply the second sidelink configuration corresponding to the updated index (the second index), to improve reliability of the sidelink communication between the first terminal device and the second terminal device.

In some implementations, first indication information is received from the network device, where the first indication information indicates to remove the first sidelink configuration.

In some implementations, it is determined, based on a timestamp of the second sidelink configuration and a first moment, to perform the sidelink communication with the second terminal device based on the second sidelink configuration, where the first moment is a moment at which the second information is generated or sent.

In some implementations, if a moment corresponding to the timestamp of the second sidelink configuration is later than the first moment, the sidelink communication is performed with the second terminal device based on the second sidelink configuration.

In some implementations, when the first sidelink configuration is different from the second sidelink configuration, the second sidelink configuration is sent to the second terminal device.

In some implementations, the sidelink configuration includes a sidelink measurement configuration or a sidelink discontinuous reception DRX configuration.

According to a fourth aspect, a communication method is provided. The method may be implemented by a network device or a component (for example, a processor or a chip) in the network device. The method includes: receiving first information from a first terminal device, where the first information includes an identifier of a second terminal device, and the identifier of the second terminal device corresponds to a first index; receiving second information from the first terminal device, where the second information includes the identifier of the second terminal device, and the identifier of the second terminal device corresponds to a second index; sending first indication information to the first terminal device, where the first indication information indicates to remove a first sidelink configuration, and the first sidelink configuration corresponds to the first index; and sending a second sidelink configuration to the first terminal device, where the second sidelink configuration is used by the first terminal device to perform sidelink communication with the second terminal device, and the second sidelink configuration corresponds to the second index. Based on this technical solution, the network device indicates to release the first sidelink configuration, so that the first terminal device can release the first sidelink configuration and apply the second sidelink configuration corresponding to the updated index (the second index), to improve reliability of the sidelink communication between the first terminal device and the second terminal device.

Based on this technical solution, the index corresponding to the identifier of the second terminal device is updated, so that the first terminal device can apply the sidelink configuration corresponding to the updated index (the second index), to improve reliability of the sidelink communication between the first terminal device and the second terminal device.

In some implementations, a timestamp of the second sidelink configuration is sent to the first terminal device, where the timestamp of the second sidelink configuration is for determining to perform the sidelink communication with the second terminal device based on the second sidelink configuration.

In some implementations, the sidelink configuration includes a sidelink measurement configuration or a sidelink discontinuous reception DRX configuration.

According to a fifth aspect, a communication method is provided. The method may be implemented by a first terminal device or a component (for example, a processor or a chip) in the first terminal device. The method includes: sending first information to a network device, where the first information includes an identifier of a second terminal device, and the second terminal device corresponds to a first index; receiving a first correspondence from the network device, where the first correspondence includes a correspondence between the identifier of the second terminal device and a second index; and performing sidelink communication with the second terminal device based on a first sidelink configuration, where the first sidelink configuration corresponds to the second index.

Based on this technical solution, the network device configures the correspondence between the identifier of the second terminal device and the second index, so that the first terminal device can apply, based on the correspondence, the sidelink configuration corresponding to the second index, to improve reliability of the sidelink communication between the first terminal device and the second terminal device.

In some implementations, it is determined, based on a timestamp of the first sidelink configuration and a first moment, to perform the sidelink communication with the second terminal device based on the first sidelink configuration, where the first moment is a moment at which the second information is generated or sent.

In some implementations, if a moment corresponding to the timestamp of the first sidelink configuration is later than the first moment, the sidelink communication is performed with the second terminal device based on the first sidelink configuration.

In some implementations, when the first sidelink configuration is different from a second sidelink configuration, the first sidelink configuration is sent to the second terminal device, where the second sidelink configuration corresponds to the first index.

In some implementations, the sidelink configuration includes a sidelink measurement configuration or a sidelink discontinuous reception DRX configuration.

According to a sixth aspect, a communication apparatus is provided. The apparatus includes a transceiver unit and a processing unit. The transceiver unit is configured to send first information to a network device, where the first information includes an identifier of a second terminal device, and the identifier of the second terminal device corresponds to a first index. The transceiver unit is further configured to send second information to the network device, where the second information includes the identifier of the second terminal device, and the identifier of the second terminal device corresponds to a second index. The processing unit is configured to update the first index corresponding to a first sidelink configuration to the second index. The processing unit is further configured to perform sidelink communication with the second terminal device based on a second sidelink configuration, where the second sidelink configuration corresponds to the second index.

In some implementations, the processing unit is specifically configured to determine, based on a timestamp of the second sidelink configuration and a first moment, to perform the sidelink communication with the second terminal device based on the second sidelink configuration, where the first moment is a moment at which the second information is generated or sent.

In some implementations, if a moment corresponding to the timestamp of the second sidelink configuration is later than the first moment, the processing unit is specifically configured to perform the sidelink communication with the second terminal device based on the second sidelink configuration.

In some implementations, the transceiver unit is specifically configured to: when the first sidelink configuration is different from the second sidelink configuration, send the second sidelink configuration to the second terminal device.

In some implementations, the sidelink configuration includes a sidelink measurement configuration or a sidelink discontinuous reception DRX configuration.

According to a seventh aspect, a communication apparatus is provided. The apparatus includes a transceiver unit and a processing unit. The transceiver unit is configured to send first information to a network device, where the first information includes an identifier of a second terminal device, and the identifier of the second terminal device corresponds to a first index. The transceiver unit is further configured to send second information to the network device, where the second information includes the identifier of the second terminal device, and the identifier of the second terminal device corresponds to a second index. The processing unit is further configured to determine, based on the identifier of the second terminal device, a first sidelink configuration, and a second sidelink configuration, to perform sidelink communication with the second terminal device based on the second sidelink configuration, where the first sidelink configuration corresponds to the first index, and the second sidelink configuration corresponds to the second index.

In some implementations, the processing unit is specifically configured to: determine, based on the second index included in second configuration information and the second information, that an identifier of a terminal device corresponding to the second index is the identifier of the second terminal device; determine the first index based on the determined identifier of the second terminal device and the first information; and update the first sidelink configuration to the second sidelink configuration based on the first index, and perform the sidelink communication with the second terminal device based on the second sidelink.

In some implementations, the processing unit is further configured to determine, based on a timestamp of the second sidelink configuration and a first moment, to perform the sidelink communication with the second terminal device based on the second sidelink configuration, where the first moment is a moment at which the second information is generated or sent.

In some implementations, the processing unit is specifically configured to: if a moment corresponding to the timestamp of the second sidelink configuration is later than the first moment, perform the sidelink communication with the second terminal device based on the second sidelink configuration.

In some implementations, the transceiver unit is further configured to: when the first sidelink configuration is different from the second sidelink configuration, send the second sidelink configuration to the second terminal device.

In some implementations, the sidelink configuration includes a sidelink measurement configuration or a sidelink discontinuous reception DRX configuration.

According to an eighth aspect, a communication apparatus is provided. The apparatus includes a transceiver unit and a processing unit. The transceiver unit is configured to send first information to a network device, where the first information includes an identifier of a second terminal device, and the identifier of the second terminal device corresponds to a first index. The transceiver unit is further configured to: send second information to the network device, where the second information includes the identifier of the second terminal device, and the identifier of the second terminal device corresponds to a second index; and release a first sidelink configuration, where the first sidelink configuration corresponds to the first index. The processing unit is configured to perform sidelink communication with the second terminal device based on a second sidelink configuration, where the second sidelink configuration corresponds to the second index.

In some implementations, the transceiver unit is further configured to receive first indication information from the network device, where the first indication information indicates to remove the first sidelink configuration.

In some implementations, the processing unit is specifically configured to determine, based on a timestamp of the second sidelink configuration and a first moment, to perform the sidelink communication with the second terminal device based on the second sidelink configuration, where the first moment is a moment at which the second information is generated or sent.

In some implementations, the processing unit is specifically configured to: if a moment corresponding to the timestamp of the second sidelink configuration is later than the first moment, perform the sidelink communication with the second terminal device based on the second sidelink configuration.

In some implementations, the transceiver unit is further configured to: when the first sidelink configuration is different from the second sidelink configuration, send the second sidelink configuration to the second terminal device.

In some implementations, the sidelink configuration includes a sidelink measurement configuration or a sidelink discontinuous reception DRX configuration.

According to a ninth aspect, a communication apparatus is provided. The apparatus includes a transceiver unit and a processing unit. The transceiver unit is configured to: receive first information from a first terminal device, where the first information includes an identifier of a second terminal device, and the identifier of the second terminal device corresponds to a first index; and receive second information from the first terminal device, where the second information includes the identifier of the second terminal device, and the identifier of the second terminal device corresponds to a second index. The transceiver unit is further configured to send first indication information to the first terminal device, where the first indication information indicates to remove a first sidelink configuration, and the first sidelink configuration corresponds to the first index. The transceiver unit is further configured to send a second sidelink configuration to the first terminal device, where the second sidelink configuration is used by the first terminal device to perform sidelink communication with the second terminal device, and the second sidelink configuration corresponds to the second index.

In some implementations, the transceiver unit is further configured to send a timestamp of the second sidelink configuration to the first terminal device, where the timestamp of the second sidelink configuration is for determining to perform the sidelink communication with the second terminal device based on the second sidelink configuration.

In some implementations, the sidelink configuration includes a sidelink measurement configuration or a sidelink discontinuous reception DRX configuration.

According to a tenth aspect, a communication apparatus is provided. The apparatus includes a transceiver unit and a processing unit. The transceiver unit is configured to send first information to a network device, where the first information includes an identifier of a second terminal device, and the second terminal device corresponds to a first index. The transceiver unit is further configured to receive a first correspondence from the network device, where the first correspondence includes a correspondence between the identifier of the second terminal device and a second index. The processing unit is configured to perform sidelink communication with the second terminal device based on the first sidelink configuration, where the first sidelink configuration corresponds to the second index.

In some implementations, the processing unit is specifically configured to determine, based on a timestamp of the first sidelink configuration and a first moment, to perform the sidelink communication with the second terminal device based on the first sidelink configuration, where the first moment is a moment at which the second information is generated or sent.

In some implementations, the processing unit is specifically configured to: if a moment corresponding to the timestamp of the first sidelink configuration is later than the first moment, perform the sidelink communication with the second terminal device based on the first sidelink configuration.

In some implementations, when the first sidelink configuration is different from a second sidelink configuration, the transceiver unit is further configured to send the first sidelink configuration to the second terminal device, where the second sidelink configuration corresponds to the first index. In some implementations, the sidelink configuration includes a sidelink measurement configuration or a sidelink discontinuous reception DRX configuration.

According to an eleventh aspect, a communication apparatus is provided, including a processor. The processor is coupled to a memory, and may be configured to execute instructions in the memory, to implement the method in any one of the first aspect, the second aspect, the third aspect, the fifth aspect, or the possible implementations of any one of the aspects. Optionally, the communication apparatus further includes the memory. Optionally, the communication apparatus further includes a communication interface, and the processor is coupled to the communication interface.

In an implementation, the communication apparatus is a first terminal device. When the communication apparatus is the first terminal device, the communication interface may be a transceiver or an input/output interface.

In another implementation, the communication apparatus is a chip configured in the first terminal device. When the communication apparatus is the chip configured in the first terminal device, the communication interface may be an input/output interface.

Optionally, the transceiver may be a transceiver circuit. Optionally, the input/output interface may be an input/output circuit.

According to a twelfth aspect, a communication apparatus is provided, including a processor. The processor is coupled to a memory, and may be configured to execute instructions in the memory, to implement the method in any one of the first aspect, the second aspect, the third aspect, the fifth aspect, or the possible implementations of any one of the aspects. Optionally, the communication apparatus further includes the memory. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip configured in the network device. When the communication apparatus is the chip configured in the network device, the communication interface may be an input/output interface.

Optionally, the transceiver may be a transceiver circuit. Optionally, the input/output interface may be an input/output circuit.

According to a thirteenth aspect, a processor is provided, including an input circuit, an output circuit, and a processing circuit. The processing circuit is configured to: receive a signal through the input circuit, and transmit a signal through the output circuit, to enable the processor to perform the method in any one of the possible implementations of the first aspect to the fifth aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be, for example, but not limited to, output to a transmitter and transmitted by the transmitter, and the input circuit and the output circuit may be a same circuit, where circuit is used as the input circuit and the output circuit at different moments. Specific implementations of the processor and various circuits are not limited in this embodiment of this application.

According to a fourteenth aspect, a processing apparatus is provided, including a processor and a memory. The processor is configured to: read instructions stored in the memory, receive a signal by using a receiver, and transmit a signal by using a transmitter, to perform the method in any one of the possible implementations of the first aspect to the fifth aspect.

Optionally, there are one or more processors, and there are one or more memories.

Optionally, the memory may be integrated with the processor, or the memory and the processor are disposed separately.

In a specific implementation process, the memory may be a non-transitory (non-transitory) memory, for example, a read only memory (read only memory, ROM). The memory and the processor may be integrated on a same chip, or may be separately disposed on different chips. A type of the memory and a manner of disposing the memory and the processor are not limited in this embodiment of this application.

It should be understood that a related data exchange process such as sending of indication information may be a process of outputting the indication information from the processor, and receiving of capability information may be a process of receiving the input capability information by the processor. Specifically, data output by the processor may be output to the transmitter, and input data received by the processor may come from the receiver. The transmitter and the receiver may be collectively referred to as a transceiver.

The processing apparatus in the fourteenth aspect may be one or more chips. The processor in the processing apparatus may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a fifteenth aspect, a computer program product is provided. The computer program product includes a computer program (which may also be referred to as code or instructions). When the computer program is run, a computer is enabled to perform the method in any one of the possible implementations of the first aspect to the fifth aspect.

According to a sixteenth aspect, a computer-readable storage medium is provided. The computer-readable storage medium stores a computer program (which may also be referred to as code or instructions). When the computer program is run on a computer, the method in any one of the possible implementations of the first aspect to the fifth aspect is performed.

According to a seventeenth aspect, a communication system is provided, including at least one of the foregoing first terminal device, network device, and second terminal device.

### BRIEF DESCRIPTION OF DRAWINGS

FIG. 1 is a diagram of a communication scenario applicable to technical solutions of this application;
FIG. 2 is a schematic flowchart of a sidelink configuration method;
FIG. 3 is a schematic flowchart of a communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application; and
FIG. 8 to FIG. 10 each are a diagram of a structure of a possible apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a 5th generation (5th generation, 5G) system, a new radio (new radio, NR), a wireless fidelity (wireless fidelity, Wi-Fi) system, a cellular system related to a 3rd generation partnership project (3rd generation partnership project, 3GPP), a communication system that supports convergence of a plurality of wireless technologies, a future-oriented evolved system, or the like. This is not limited.

With development of communication technologies, a mobile communication system not only supports conventional communication, but also supports, for example, device to device (device to device, D2D) communication, machine to machine (machine to machine, M2M) communication, machine type communication (machine type communication, MTC), and vehicle to everything (vehicle to everything, V2X) communication (which may also be referred to as internet of vehicles communication), for example, vehicle to vehicle (vehicle to vehicle, V2V) communication (which may also be referred to as vehicle-to-vehicle communication), vehicle to infrastructure (vehicle to infrastructure, V2I) communication (which may also be referred to as vehicle-to-infrastructure communication), vehicle to pedestrian (vehicle to pedestrian, V2P) communication (which may also be referred to as vehicle-to-pedestrian communication), and vehicle to network (vehicle to network, V2N) communication (which may also be referred to as vehicle-to-network communication).

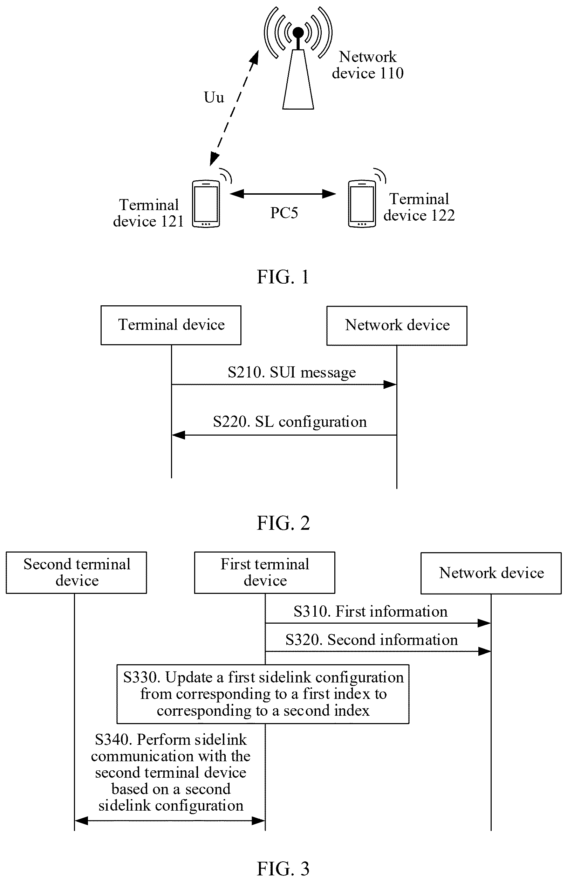

FIG. 1 is a diagram of an architecture of a communication system applicable to embodiments of this application.

The communication system applicable to embodiments of this application mainly includes a terminal device, for example, a terminal device 121 and a terminal device 122 shown in FIG. 1, and a network device, for example, a network device 110 shown in FIG. 1. In addition, the communication system mainly includes two types of communication interfaces, for example, a communication interface (Uu interface) between the terminal device 121 and the network device 110 and a communication interface (PC5 interface) between the terminal device 121 and the terminal device 122. The Uu interface is used for communication between the terminal device and the network device, and the PC5 interface is used for sidelink communication between the terminal devices. A link used by the terminal device to send data to the network device on the Uu interface is referred to as an uplink (uplink), and a link used by the terminal device to receive data sent by the network device is referred to as a downlink (downlink). A link for transmitting data between the terminal devices on the PC5 interface is referred to as a sidelink (sidelink) or a straight-through link. The sidelink is generally used in a scenario in which direct communication can be performed between devices, such as device to device (device to device, D2D). In this scenario, data transmission between devices does not need to pass through a network device. Vehicle to everything (vehicle to everything, V2X) communication may be considered as a case of D2D communication.

In future communication, names of the Uu interface or the PC5 interface may remain unchanged, or may be replaced with other names. This is not limited in this application.

The terminal device in embodiments of this application may be briefly referred to as a terminal. The terminal device may be a device having a wireless transceiver function. The terminal device may be mobile or fixed. The terminal device may be deployed on land, where the deployment includes indoor or outdoor, or handheld or vehicle-mounted deployment, may be deployed on water (for example, on a ship), or may be deployed in air (for example, on aircraft, a balloon, or a satellite). The terminal device may include a mobile phone (mobile phone), a pad (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal device in transportation safety (transportation safety), a wireless terminal device in a smart city (smart city), and/or a wireless terminal device in a smart home (smart home). Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, an in-vehicle device, a wearable device, a terminal device in the 5th generation (the 5th generation, 5G) network, a terminal device in a further evolved public land mobile communication network (public land mobile network, PLMN), or the like. The terminal device may also be referred to as a user equipment (user equipment, UE) sometimes. Optionally, the terminal device may communicate with a plurality of access network devices by using different technologies. For example, the terminal device may communicate with an access network device supporting LTE, or may communicate with an access network device supporting 5G, or may be dual-connected to an access network device supporting LTE and an access network device supporting 5G. This is not limited in this application.

In this application, an apparatus configured to implement a function of the terminal device may be the terminal device, or may be an apparatus that can support the terminal device in implementing the function, for example, a chip system, a hardware circuit, a software module, or a combination of a hardware circuit and a software module. The apparatus may be installed in the terminal device or may be used in matching with the terminal device. In this application, an example in which an apparatus configured to implement a function of the terminal device is the terminal device, and the terminal device is a UE is used to describe the technical solutions provided in this application.

In this application, the chip system may include a chip, or may include a chip and another discrete device.

In this application, a receive end terminal device used when SL communication is performed between terminal devices may also be referred to as a receive end (destination).

The network device in embodiments of this application may also be referred to as an access network (radio access network, RAN) device.

The RAN device is a node or a device that connects the terminal device to a wireless network, and the RAN device may also be referred to as a base station. The RAN device includes, for example, but is not limited to: a base station, a next generation NodeB (generation NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station, (for example, a home evolved NodeB or a home NodeB, HNB), a baseband unit (baseband unit, BBU), a transmission reception point (transmission reception point, TRP), a transmission point (transmission point, TP), and/or a mobile switching center. Alternatively, the access network device may be at least one of a central unit (central unit, CU), a distributed unit (distributed unit, DU), a central unit control plane (CU control plane, CU-CP) node, a central unit user plane (CU user plane, CU-UP) node, integrated access and backhaul (integrated access and backhaul, IAB), a wireless controller in a cloud radio access network (cloud radio access network, CRAN) scenario, or the like. Alternatively, the access network device may be a relay station, an access point, an in-vehicle device, a terminal device, a wearable device, an access network device in a 5G network, an access network device in a future evolved public land mobile network (public land mobile network, PLMN), or the like. Alternatively, the network device in embodiments of this application may be an open-radio access network (open-radio access network, O-RAN) device (open RAN, or ORAN). The O-RAN device may include an open-distributed unit (open-distributed unit, O-DU) and an open-central unit (open-central unit, O-CU). In embodiments of this application, a function of the network device may be performed by a module (such as a chip) in the network device, or may be performed by a control subsystem including the function of the network device. The control subsystem including the function of the network device herein may be a control center in the foregoing application scenarios such as a smart grid, industrial control, intelligent transportation, and a smart city. A specific technology and a specific device form that are used for the network device are not limited in embodiments of this application.

In this application, an apparatus configured to implement a function of the access network device may be the access network device, or may be an apparatus that can support the access network device in implementing the function, for example, a chip system, a hardware circuit, a software module, or a combination of a hardware circuit and a software module. The apparatus may be installed in the access network device or may be used in matching with the access network device. In this application, an example in which an apparatus configured to implement a function of the access network device is the access network device, and the access network device is a base station is used to describe the technical solutions provided in this application.

The architecture shown in FIG. 1 that can be applied to embodiments of this application is merely an example for description, and an architecture applicable to embodiments of this application is not limited thereto. Any architecture that can implement functions of the foregoing devices is applicable to embodiments of this application.

It should be further understood that the foregoing names are defined only for ease of distinguishing between different functions, and shall not constitute any limitation on this application. This application does not exclude a possibility of using another name in the 5G network and another future network. For example, in a 6G network, some or all of the foregoing devices may use terms in 5G, or may use other names or the like. Names of the interfaces between devices in FIG. 1 are merely examples. In specific implementation, names of the interfaces may be other names. This is not specifically limited in this application. In addition, a name of a message (or signaling) transmitted between the foregoing devices is merely an example, and does not constitute any limitation on a function of the message.

SL communication between terminal devices requires a transmit-end terminal (Tx UE) to obtain a resource before sending data. There are two modes (modes) in which the Tx UE obtains the resource.
(1) Network device scheduling mode (scheduled resource allocation): Before sending SL data, the Tx UE may report a sidelink-buffer status report (sidelink-buffer status report, SL-BSR) to a gNB. The SL-BSR is for notifying the gNB of how much data needs to be sent. Based on the SL-BSR, the gNB allocates a sidelink grant (SL grant) to the Tx UE for SL transmission. Alternatively, for a periodic service, the Tx UE reports an attribute (for example, start time, a periodicity, and a packet size) of the periodic service. The gNB configures a periodic SL grant for the UE, and subsequently the UE does not need to frequently report the SL-BSR to obtain the SL grant.
(2) Autonomous contention mode (UE autonomous resource selection): In this mode, the UE may not depend on network device scheduling. The UE may receive an SL resource pool configuration from the network device, or obtain an SL resource pool configuration from a preconfiguration. The Tx UE selects an SL resource from an SL resource pool for sending. Specifically, selection may be performed randomly, or may be performed based on a result of sensing (sensing) or partial sensing (partial sensing).

A UE in an RRC connected mode may report a destination of interest to the network device by using sidelink user equipment information (sidelink UE information, SUI). The destination may be understood as indicating a receive end of corresponding SL communication, SL discovery, and SL relay. Specifically, the SUI message includes a destination list (list) (or may include one or more destination lists), and each destination in the destination list has a corresponding index number (destination index). For example, a destination index corresponding to a 1^{st} destination in the destination list is #0, a destination index corresponding to a 2^{nd} destination in the destination list is #1, and so on. When there are a plurality of destination lists, a plurality of destinations may be combined and numbered in sequence. For example, a number of a 1^{st} destination in a 2^{nd} destination list is equal to a number of a last destination in a 1^{st} destination list plus one.

After the UE (for example, the Tx UE) sends the SUI message to the network device, the network device may subsequently send an SL configuration to the UE by using an RRC message, as shown in FIG. 2.

For example, in R16, a sidelink-reference signal received power (sidelink-reference signal received power, SL-RSRP) measurement mechanism is introduced for two UEs in SL unicast communication. An SL configuration in FIG. 3 may be an SL measurement configuration, and the SL measurement configuration is associated with a destination index, to indicate a destination for which the SL measurement configuration is used. The SL measurement configuration is as follows:

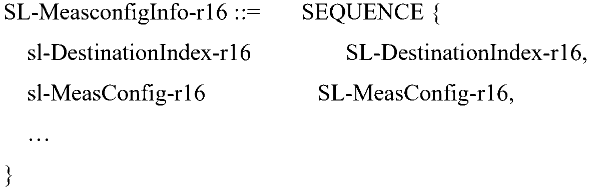

That is, the SL measurement configuration SL-MeasconfigInfo-r16 is associated with a destination index (sl-DestinationIndex-r16).

For another example, in R17, an SL discontinuous reception (discontinuous reception, DRX) mechanism is introduced for two UEs in SL unicast communication. Alternatively, the SL configuration in FIG. 3 may be an SL DRX configuration. The SL DRX configuration is associated with a destination index, and indicates a destination for which the SL DRX configuration is used. The SL DRX configuration is as follows:

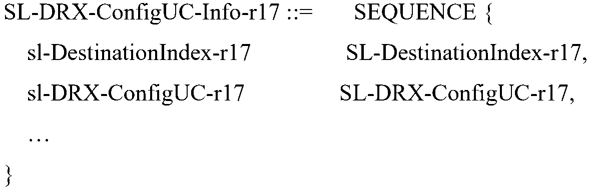

That is, the SL DRX configuration SL-DRX-ConfigUC-Info-r17 is associated with a destination index (sl-DestinationIndex-r17).

The Tx UE may maintain, based on the destination index, the SL configuration information provided by the network device. SL measurement configuration information introduced in R16 is used as an example. When the SL measurement configuration information indicates an SL measurement configuration release list, if a destination index included in the SL measurement configuration release list is an index corresponding to a current configuration of the UE, an SL measurement configuration that matches the destination index is removed (removed) from the stored SL measurement configuration. When the SL measurement configuration information indicates an SL measurement configuration addition or modification list, if a destination index included in the received SL measurement configuration addition or modification list is a currently stored SL measurement configuration, an SL measurement configuration corresponding to the destination index in the stored SL measurement configuration is reconfigured; or if a destination index included in the received SL measurement configuration addition or modification list is not a currently stored SL measurement configuration, an SL measurement configuration item corresponding to the destination index is added to the stored SL measurement configuration. The SL configuration information may include at least one SL measurement configuration. The SL configuration information may be an SL configuration release list, or an SL configuration corresponding to an SL measurement configuration addition or modification list. For ease of description, one SL measurement configuration in the following solutions may be an item in the SL measurement configuration release list, or an item in the SL measurement configuration addition or modification list.

When content of the SUI message changes, that is, information about a destination included in the destination list, for example, a destination identification (identification, ID), changes, or a destination indicated by a destination index changes, the UE reports an updated SUI to the network device again. The network device sends SL configuration information based on the updated SUI. In this case, if the UE maintains the SL configuration information based on the destination index, an SL configuration associated with the destination index may not be applied to a corresponding destination.

For example, as shown in Table 1, destination indexes #0 to #2 in previous SUI respectively correspond to a destination ID #x to a destination ID #z. In updated SUI, a destination ID represented by the destination index #1 changes from the destination ID #y to a destination ID #z, and a destination ID represented by the destination index #2 changes from the destination ID #z to a destination ID #m.

**Table 1**

| Destination information in previous SUI | | Destination information in updated SUI | |
|---|---|---|---|
| Destination ID | Destination index | Destination ID | Destination index |
| #x | #0 | #x | #0 |
| #y | #1 | #z | #1 |
| #z | #2 | #m | #2 |

If the SL configuration information provided by the network device is determined based on the updated SUI, and the UE understands, based on the updated SUI, the destination index associated with the SL configuration:
if the SL configuration provided by the network device is associated with the destination index #1, and the UE has locally released the SL configuration of the destination index #1, the UE considers the SL configuration as a newly added configuration according to an existing solution, but actually, the network device may just provide a modified SL configuration for the destination ID #z (because a destination index of the destination ID #z changes from #2 to #1), and in this case, the UE considers a modified configuration as a newly added configuration, which may cause an SL configuration failure for the destination ID #z; or
if the SL configuration provided by the network device is associated with the destination index #2, the UE understands the SL configuration as a modified SL configuration provided for the destination ID #m, but actually, the network device may provide a newly added SL configuration for the destination ID #m, and in this case, the UE uses the newly added configuration as the modified configuration, which may result in an incorrect understanding of applying the SL configuration for the destination ID #m.

In conclusion, how the terminal device flexibly applies SL configurations corresponding to one or more indexes is a problem that needs to be resolved.

In view of this, this application provides a communication method, to help resolve the foregoing problem.

For ease of understanding embodiments of this application, the following descriptions are provided. First, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Second, "first", "second", and various numeric numbers (for example, "#1", and "#2") shown in this application are merely for ease of description, and are used to distinguish between objects, but are not intended to limit the scope of embodiments of this application. For example, "first", "second", and various numeric numbers are used to distinguish between different terminal devices, but are not used to describe a specific order or sequence. It should be understood that the objects described in such a way are interchangeable in an appropriate circumstance, so that a solution other than embodiments of this application can be described.

Third, in embodiments of this application, "of (of)", "corresponding (corresponding, relevant)", "corresponding (corresponding)", and "associate (associate)" may be interchangeably used sometimes. It should be noted that meanings expressed by the terms are consistent when differences are not emphasized.

Fourth, in embodiments of this application, "A is associated with B" may be understood as "B needs to be used for determining A", or may be understood as "A is determined based on B".

FIG. 3 is a schematic flowchart of a communication method according to an embodiment of this application.

In an interaction flowchart in this application, an example in which a network device and a terminal device are used as execution bodies for interaction is used to illustrate a corresponding method. However, execution bodies for the interaction are not limited in this application. For example, the network device in the figure may alternatively be a chip, a chip system, or a processor that supports the network device in implementing a corresponding method, or may be a logical module or software that can implement all or some functions of the network device; and the terminal device in the figure may alternatively be a chip, a chip system, or a processor that supports the terminal device in implementing a corresponding method, or may be a logical module or software that can implement all or some functions of the terminal device. The method may include at least the following several steps.

S310. A first terminal device sends first information to a network device. Correspondingly, the network device receives the first information from the first terminal device.

The first information may include an identifier of a second terminal device, the identifier of the second terminal device corresponds to a first index, and the second terminal device is a terminal device that may perform sidelink communication, sidelink discovery, or sidelink relay with the first terminal device.

For example, the first information may be SUI. The identifier of the second terminal device is a destination ID #z, and an index corresponding to the destination ID #z is an index #1.

It may be understood that the first information may further include an identifier of at least one third terminal device, and an identifier of each of the at least one third terminal device corresponds to a different index. The at least one third terminal device is a terminal device that may perform sidelink communication with the first terminal device. For example, an identifier of one of the at least one third terminal device is a destination ID #x, and an index corresponding to the destination ID #x is an index #0.

Optionally, the network device sends a first sidelink configuration to the first terminal device. Correspondingly, the first terminal device receives the first sidelink configuration from the network device.

The first sidelink configuration may be one item of sidelink configuration information #1. The first sidelink configuration includes the first index, in other words, the first sidelink configuration is associated with (corresponds to) the first index. The first sidelink configuration is used by the first terminal device to perform the sidelink communication with the second terminal device.

Optionally, the first terminal device stores the first sidelink configuration. In other words, the first terminal device applies the first sidelink configuration.

For example, the sidelink configuration information #1 is a sidelink configuration release list. If the first terminal device stores a sidelink configuration (for example, a sidelink configuration #0) corresponding to the first index, the first terminal device removes the sidelink configuration (for example, the sidelink configuration #0) corresponding to the first index.

For another example, the sidelink configuration information #1 is a sidelink configuration addition or modification list. If the first terminal device stores a sidelink configuration (a sidelink configuration #0) corresponding to the first index, the first terminal device reconfigures, based on the first sidelink configuration, the sidelink configuration #0 corresponding to the first index; or if the first terminal device does not store a sidelink configuration corresponding to the first index, the first terminal device adds the first sidelink configuration to the first index.

Optionally, the sidelink configuration information may further include at least one third sidelink configuration, and the third sidelink configuration is used by the first terminal device to perform sidelink communication with the at least one third terminal device. Correspondingly, the first terminal device stores the third sidelink configuration. For details, refer to the foregoing descriptions of storing the first sidelink configuration.

S320. The first terminal device sends second information to the network device. Correspondingly, the network device receives the second information from the first terminal device.

The second information may include the identifier of the second terminal device, and the identifier of the second terminal device corresponds to a second index.

For example, the second information may be SUI. The identifier of the second terminal device is a destination ID #z, and an index corresponding to the destination ID #z is an index #2.

To be specific, when the first terminal device sends updated SUI to the network device, the index corresponding to the destination ID #z changes from the index #1 to the index #2.

Optionally, the second information may further include identifiers of some or all of the at least one third terminal device, and the some or all of the terminal devices correspond to different indexes. If an index corresponding to the at least one third terminal device changes, for example, an index corresponding to a destination ID #x changes from an index #0 to an index #3, for a subsequent process of applying a sidelink configuration to the destination ID #x, refer to that of the second terminal device.

Optionally, the second information may further include an identifier of a fourth terminal device, the fourth terminal device includes at least one terminal device, and the at least one terminal device corresponds to a different index. The fourth terminal device is a newly added terminal device. For example, the identifier of the fourth terminal device is a destination ID #m, and an index corresponding to the destination ID #m is an index #4.

S330. The first terminal device updates the first sidelink configuration from corresponding to the first index to corresponding to the second index.

Specifically, the first terminal device stores the first sidelink configuration, and the first sidelink configuration corresponds to the first index (refer to the descriptions of S310). The first terminal device determines, based on the first information, that an identifier of a terminal device corresponding to the first index is the identifier of the second terminal device. The first terminal device determines, based on the second information, that an index corresponding to the identifier of the second terminal device is the second index. The first terminal device updates the index (the first index) corresponding to the stored first sidelink configuration to the second index.

For example, the identifier of the second terminal device is the destination ID #z. In the first information, the index corresponding to the destination ID #z is the index #1, and the first terminal device stores a sidelink configuration (the first sidelink configuration) corresponding to the index #1. When the first terminal device sends the second information, the index corresponding to the destination ID #z changes from the index #1 to the index #2, and the first terminal device updates the index corresponding to the first sidelink configuration from the index #1 to the index #2.

Optionally, the network device sends a second sidelink configuration to the first terminal device. Correspondingly, the first terminal device receives the second sidelink configuration from the network device.

The second sidelink configuration may be one item of sidelink configuration information #2. The second sidelink configuration includes the second index, in other words, the second sidelink configuration information is associated with (corresponds to) the second index. The second sidelink configuration is used by the first terminal device to perform the sidelink communication with the second terminal device.

Optionally, the first terminal device stores the second sidelink configuration. In other words, the first terminal device applies the second sidelink configuration information.

For example, the first terminal device receives the second sidelink configuration from the network device, and the first terminal device determines that an index corresponding to the second sidelink configuration is the index #2 (an example of the second index). If the sidelink configuration information #2 is a sidelink configuration addition or modification list, the first terminal device reconfigures, based on the second sidelink configuration, a stored sidelink configuration (the first sidelink configuration) corresponding to the index #2. If the sidelink configuration information #2 is a sidelink configuration release list, the first terminal device releases a sidelink configuration (the first sidelink configuration) corresponding to the index #2.

Optionally, the sidelink configuration information #2 may further include a sidelink configuration #4. The sidelink configuration #4 is used by the first terminal device to perform sidelink communication with the fourth terminal device. The first terminal device newly adds the sidelink configuration #4. For example, the sidelink configuration #4 may include an index #4, and the first terminal device newly adds a sidelink configuration corresponding to the index #4. The sidelink configuration #4 may be used by the first terminal device to perform sidelink communication with a terminal device corresponding to a destination ID #m.

The sidelink configuration described above may be a configuration for sidelink communication. The sidelink configuration may be a sidelink measurement configuration, a sidelink DRX configuration, or another sidelink configuration. This is not limited in this application.

The sidelink configuration may be generated by the network device. The network device may generate the sidelink configuration in a plurality of implementations. This is not limited in this application.

For example, when the sidelink configuration is the sidelink measurement configuration, the sidelink configuration may be generated by a CU, and sent by the CU to a DU (for example, sent by using an RRC message), and the sidelink configuration may be sent by the DU to the first terminal device.

For another example, when the sidelink configuration is the sidelink DRX configuration, the sidelink configuration may be generated by a DU. The DU may first send the sidelink configuration to a CU, the CU processes the sidelink configuration and sends processed sidelink configuration to the DU, and the DU sends the processed sidelink configuration to the first terminal device.

The actions or features of the network device in this embodiment of this application may be implemented in a plurality of manners, for example, implemented by one or more of a CU, a DU, an O-CU, or an O-DU. This is not specifically limited. Descriptions of same or similar cases are omitted below.

S340. The first terminal device performs the sidelink communication with the second terminal device based on the second sidelink configuration.

In a possible implementation, the first terminal device determines, based on first identification information, to perform the sidelink communication with the second terminal device based on the second sidelink configuration.

In an example, the first identification information may be a timestamp of the second sidelink configuration.

Specifically, if a moment corresponding to the timestamp (denoted as a timestamp #1) of the second sidelink configuration is later than a first moment, and the first moment is a moment at which the second information is generated or sent, the sidelink communication is performed with the second terminal device based on the second sidelink configuration.

The timestamp #1 may be carried in the second sidelink configuration, or the timestamp #1 and the second sidelink configuration are carried in same information and sent by the network device to the first terminal device. The timestamp #1 may be a timestamp corresponding to a moment at which the second sidelink configuration is generated or sent.

In another example, the first identification information is a transaction identifier (RRC-TransactionIdentifier). RRC-TransactionIdentifier is RRC-TransactionIdentifier corresponding to an RRC message carrying the second sidelink configuration.

Specifically, when RRC-TransactionIdentifier is the same as a transaction identifier corresponding to the second information, the first terminal device determines to perform the sidelink communication with the second terminal device based on the second sidelink configuration. Optionally, before the first terminal device performs the sidelink communication with the second terminal device based on the second sidelink configuration, the first terminal device sends the second sidelink configuration to the second terminal device.

In a possible implementation, the first terminal device determines whether the first sidelink configuration is the same as the second sidelink configuration, and when the first sidelink configuration is different from the second sidelink configuration, the first terminal device sends the second sidelink configuration to the second terminal device.

According to the communication method provided in this embodiment of this application, when the index corresponding to the second terminal device changes (for example, from the index#1 to the index#2), the index corresponding to the stored sidelink configuration of the second terminal device is updated to the index (index#2) after the change, so that the first terminal device can apply, based on the index #2, the sidelink configuration corresponding to the index #2.

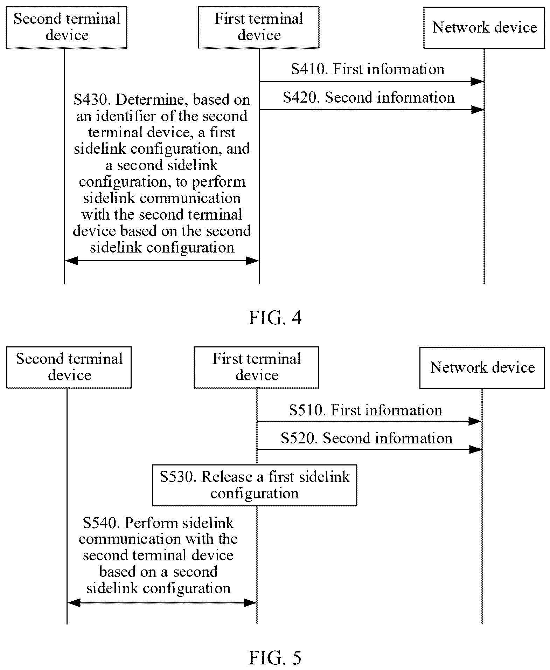

FIG. 4 is a schematic flowchart of a communication method according to an embodiment of this application. The method may include at least the following several steps.

S410. A first terminal device sends first information to a network device. Correspondingly, the network device receives the first information from the first terminal device.

The first information may include an identifier of a second terminal device, and the identifier of the second terminal device corresponds to a first index.

For example, the identifier of the second terminal device is a destination ID #z, and an index corresponding to the destination ID #z is an index #1.

For the first information, refer to the descriptions of S310.

Optionally, the network device sends a first sidelink configuration to the first terminal device. Correspondingly, the first terminal device receives the first sidelink configuration from the network device.

The first sidelink configuration includes the first index, in other words, the first sidelink configuration is associated with (corresponds to) the first index. Optionally, the first terminal device stores (applies) the first sidelink configuration. For details, refer to the descriptions of S310. S420. The first terminal device sends second information to the network device. Correspondingly, the network device receives the second information from the first terminal device.

The second information may include the identifier of the second terminal device, and the identifier of the second terminal device corresponds to a second index.

For example, the identifier of the second terminal device is a destination ID #z, and an index corresponding to the destination ID #z is an index #2.

Optionally, the network device sends a second sidelink configuration to the first terminal device. Correspondingly, the first terminal device receives the second sidelink configuration from the network device

The second sidelink configuration includes the second index, in other words, the second sidelink configuration information may correspond to (be associated with) the second index. The second sidelink configuration is used by the first terminal device to perform sidelink communication with the second terminal device.

S430. The first terminal device determines, based on the identifier of the second terminal device, the first sidelink configuration, and the second sidelink configuration, to perform the sidelink communication with the second terminal device based on the second sidelink configuration.

Specifically, the first terminal device determines, based on the second index included in second configuration information and the second information, that an identifier of a terminal device corresponding to the second index is the identifier of the second terminal device. The first terminal device determines the first index based on the determined identifier of the second terminal device and the first information. The first terminal device updates the first sidelink configuration to the second sidelink configuration based on the first index, and performs the sidelink communication with the second terminal device based on the second sidelink.

For example, the identifier of the second terminal device is the destination ID #z. The first terminal device determines that the second sidelink configuration is associated with the index #2 (an example of the second index). The first terminal device determines, based on the second information, that the index #2 corresponds to the destination ID #z. If the first terminal device determines that, in the first information, an index corresponding to the destination ID #z is the index #1, the first terminal device reconfigures, based on the second sidelink configuration, the stored sidelink configuration (the first sidelink configuration) corresponding to the destination ID #z, and performs the sidelink communication with the second terminal device based on the second sidelink configuration.

Optionally, before S430, the method further includes: The network device sends a second sidelink configuration to the first terminal device. Correspondingly, the first terminal device receives the second sidelink configuration from the network device, and the first terminal device stores (applies) the second sidelink configuration.

The second sidelink configuration includes the second index, in other words, the second sidelink configuration information may correspond to (be associated with) the second index. The second sidelink configuration is used by the first terminal device to perform sidelink communication with the second terminal device.

For example, the second sidelink configuration may be one item of sidelink configuration information #2. If the sidelink configuration information #2 is a sidelink configuration addition or modification list, the first terminal device reconfigures, based on the second sidelink configuration, a stored sidelink configuration corresponding to the index #2. If the sidelink configuration information #2 is a sidelink configuration release list, the first terminal device releases a stored sidelink configuration corresponding to the index #2.

Optionally, the method further includes: The first terminal device determines, based on first identification information and a first moment, to perform the sidelink communication with the second terminal device based on the second sidelink configuration, where the first moment is a moment at which the second information is generated or sent.

For details, refer to the descriptions of S340.

Optionally, before the first terminal device performs the sidelink communication with the second terminal device based on the second sidelink configuration, the first terminal device sends the second sidelink configuration to the second terminal device. Refer to the descriptions of S340. According to the communication method provided in this embodiment of this application, when the index corresponding to the second terminal device changes (for example, from the index #1 to the index #2), the second terminal device may be determined based on the index corresponding to the sidelink configuration, and the sidelink configuration corresponding to the index (the index #1) of the second terminal device before the change may be determined, so that the updated sidelink configuration can be applied to the second terminal device, to improve reliability of sidelink communication between the first terminal device and the second terminal device.

FIG. 5 is a schematic flowchart of a communication method according to an embodiment of this application. The method may include at least the following several steps.

S510. A first terminal device sends first information to a network device. Correspondingly, the network device receives the first information from the first terminal device.

The first information includes an identifier of the second terminal device, and the identifier of the second terminal device corresponds to a first index. For details of the first information, refer to the descriptions of S310. Details are not described again.

Optionally, the first terminal device receives a first sidelink configuration from the network device, and the first terminal device stores the first sidelink configuration. For details, refer to the descriptions of S310.

S520. The first terminal device sends second information to the network device. Correspondingly, the network device receives the second information from the first terminal device.

The second information includes the identifier of the second terminal device, and the identifier of the second terminal device corresponds to a second index. For details of the second information, refer to the descriptions of S320.

S530. The first terminal device releases the first sidelink configuration.

"Release" may also be understood as "remove", "delete", or "discard".

In a possible implementation, the first terminal device determines that an index corresponding to the identifier of the second terminal device changes, and the first terminal device removes the first sidelink configuration.

Specifically, the UE determines, based on the first information, an identifier of a terminal device corresponding to the first index, that is, the identifier of the second terminal device, and releases a sidelink configuration corresponding to the second terminal device, that is, the first sidelink configuration.

In another possible implementation, the first terminal device determines, based on indication information from the network device, to remove the first sidelink configuration.

For example, after the network device receives the second information, if the network device determines that an index corresponding to the identifier of the second terminal device changes, the network device sends indication information #1 to the terminal device, where the indication information #1 indicates to remove the first sidelink configuration. The first terminal device removes the first sidelink configuration based on the received indication information #1.

Optionally, the network device sends a second sidelink configuration to the first terminal device. Correspondingly, the terminal device receives the second sidelink configuration.

For the second sidelink configuration, refer to the descriptions of S330.

For example, the second sidelink configuration may be one item of sidelink configuration information #2, and the sidelink configuration information #2 is a sidelink configuration addition or modification list.

It should be understood that the indication information #1 and the second sidelink configuration may be sent at the same time. For example, the indication information #1 and the second sidelink configuration are carried in a same message.

Optionally, the first terminal device determines, based on the second information, an identifier of a terminal device corresponding to the second index, that is, the identifier of the second terminal device. The first terminal device adds a sidelink configuration corresponding to the second terminal device, that is, adds the second sidelink configuration.

S540. The first terminal device performs sidelink communication with the second terminal device based on the second sidelink configuration.

This step is similar to S340, and details are not described again.

Optionally, the method further includes: The first terminal device sends the second sidelink configuration to the second terminal device. For details, refer to the descriptions of S340.

According to the communication method provided in this embodiment of this application, when the index corresponding to the identifier of the second terminal device changes (for example, changes from an index #1 to an index #2), a stored sidelink configuration of the second terminal device is released, so that the first terminal device can correctly apply a sidelink configuration corresponding to the index #2, to improve reliability of sidelink communication between the first terminal device and the second terminal device.

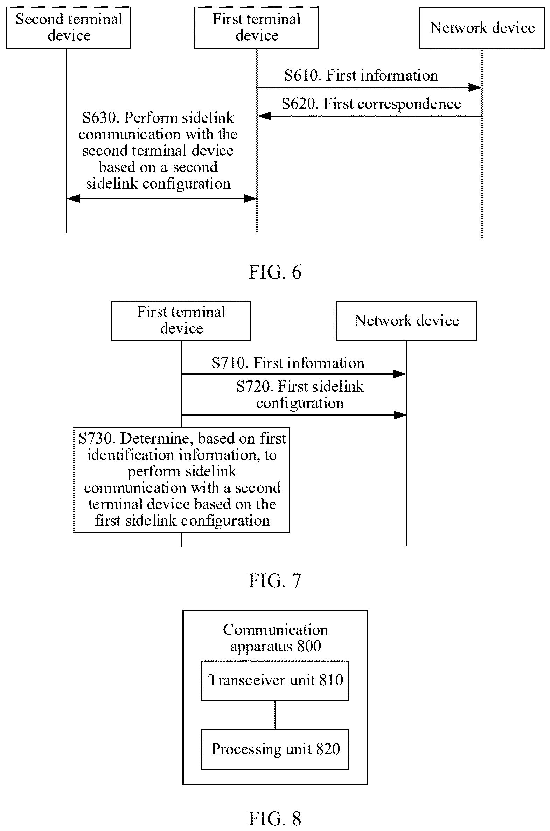

FIG. 6 is a schematic flowchart of a communication method according to an embodiment of this application. The method may include at least the following several steps.

S610. A first terminal device sends first information to a network device. Correspondingly, the network device receives the first information from the first terminal device.

The first information may include an identifier of a second terminal device, and the second terminal device corresponds to a first index. For details of the first information, refer to the descriptions of S310.

Optionally, the first information may further include an identifier of at least one third terminal device, and the identifier of the at least one third terminal device corresponds to a different index (denoted as a third index).

S620. The network device sends a first correspondence to the first terminal device. Correspondingly, the first terminal device receives the first correspondence from the network device.

The first correspondence includes a correspondence between the identifier of the second terminal device and a second index. To be specific, after receiving the first information from the first terminal device, the network device may configure an index corresponding to the identifier of the second terminal device. The index may be different from the first index corresponding to the second terminal device in the first information.

Optionally, the first correspondence may further include a correspondence between the at least one third terminal device and a fourth index, the fourth index includes at least one index, and the at least one index one-to-one corresponds to the at least one third terminal device.

For example, the network device may send the first correspondence to the first terminal device by using an RRC reconfiguration. For example, the network device sends the first correspondence by using an SL dedicated configuration (sl-ConfigDedicated) information element in an RRC reconfiguration message.

Optionally, the network device sends a first sidelink configuration to the first terminal device, where the first sidelink configuration includes the second index.

Optionally, the first sidelink configuration and the first correspondence may be sent at the same time. For example, the first sidelink configuration includes the first correspondence, or the first correspondence may be configured in the first sidelink configuration. For another example, the first sidelink configuration and the first correspondence may be carried in a same message.

S630. The first terminal device performs sidelink communication with the second terminal device based on the first sidelink configuration.

For example, the first sidelink configuration may be a configuration in SL configuration information. The SL configuration information may be an SL configuration addition or modification list, or an SL release list.

When the SL configuration is an SL configuration addition or modification list, if an index included in the SL configuration addition or modification list is included in an SL configuration currently stored in the first terminal device, the UE reconfigures the SL configuration of the index (or a destination ID corresponding to the index). If an index included in the SL configuration addition or modification list is not included in a currently stored SL configuration, the UE adds the SL configuration of the index (or a destination ID corresponding to the index).

For example, if the second index is included in the SL configuration currently stored in the first terminal device, the SL configuration corresponding to the second index is reconfigured based on the first sidelink configuration. If the second index is not included in the SL configuration currently stored in the first terminal device, the SL configuration corresponding to the second index is newly added as the first sidelink configuration.

When the SL configuration information is an SL configuration release list, if an index included in the SL configuration release list is included in a currently stored SL configuration, the UE releases the SL configuration of the index (or a destination ID corresponding to the index).

Optionally, the first terminal device may further determine, based on a timestamp of the first sidelink configuration and a first moment, to perform the sidelink communication with the second terminal device based on the first sidelink configuration, where the first moment is a moment at which the first information is generated or sent. For details, refer to the descriptions of S340.

Optionally, the method further includes: The first terminal device sends the first sidelink configuration to the second terminal device. For details, refer to the descriptions of S340. The first sidelink configuration is similar to the second sidelink configuration in S340, and the SL configuration currently stored in the first terminal device is similar to the first sidelink configuration in S340.

According to the communication method provided in this embodiment of this application, when the index corresponding to the second terminal device changes (for example, from an index #1 to an index #2), the network device sends the correspondence between the identifier of the second terminal device and the index, so that the first terminal device can correctly apply the sidelink configuration corresponding to the index #2.

FIG. 7 is a schematic flowchart of a communication method according to an embodiment of this application. The method may include at least the following several steps.

S710. A first terminal device sends first information to a network device. Correspondingly, the network device receives the first information from the first terminal device.

The first information may include an identifier of a second terminal device, and the identifier of the second terminal device corresponds to a first index.

For example, the identifier of the second terminal device is a destination ID #z, and an index corresponding to the destination ID #z is an index #1.

For the first information, refer to the descriptions of S310.

S720. The network device sends a first sidelink configuration to the first terminal device. Correspondingly, the first terminal device receives the first sidelink configuration from the network device.

The first sidelink configuration includes the first index, in other words, the first sidelink configuration is associated with (corresponds to) the first index. Optionally, the first terminal device stores (applies) the first sidelink configuration. For details, refer to the descriptions of S310. S730. The first terminal device determines, based on first identification information, to perform sidelink communication with a second terminal device based on the first sidelink configuration. In an example, the first identification information may be a timestamp of the first sidelink configuration.

Specifically, if a moment corresponding to the timestamp (denoted as a timestamp #1) of the first sidelink configuration is later than the first moment, and the first moment is a moment at which the first information is generated, the sidelink communication is performed with the second terminal device based on the first sidelink configuration.

The timestamp #1 may be carried in the first sidelink configuration, or the timestamp #1 and the second sidelink configuration are carried in same information and sent by the network device to the first terminal device. The timestamp #1 may be a timestamp corresponding to a moment at which the first sidelink configuration is generated or sent.

In another example, the first identification information is a transaction identifier (RRC-TransactionIdentifier). RRC-TransactionIdentifier is RRC-TransactionIdentifier corresponding to an RRC message carrying the first sidelink configuration.

Specifically, when RRC-TransactionIdentifier is the same as a transaction identifier corresponding to the first information, the first terminal device determines to perform the sidelink communication with the second terminal device based on the second sidelink configuration.

According to the communication method provided in this embodiment of this application, the first terminal device may determine, based on the first identification information, whether to apply the sidelink configuration sent by the network device, to improve reliability of sidelink communication between the first terminal device and the second terminal device.

The foregoing describes in detail the communication methods provided in embodiments of this application with reference to FIG. 3 and FIG. 7. The following describes in detail communication apparatuses provided in embodiments of this application with reference to FIG. 8 to FIG. 10. It should be understood that descriptions of the apparatus embodiments correspond to descriptions of the method embodiments. Therefore, for content that is not described in detail, refer to the foregoing method embodiments. For brevity, details are not described herein again.

FIG. 8 is a diagram of a communication apparatus 800 according to an embodiment of this application. The apparatus 800 includes a transceiver unit 810. The transceiver unit 810 may be configured to implement a corresponding communication function. The transceiver unit 810 may also be referred to as a communication interface or a communication unit.

Optionally, the apparatus 800 may further include a processing unit 820, and the processing unit 820 may be configured to perform data processing.

Optionally, the apparatus 800 further includes a storage unit. The storage unit may be configured to store instructions and/or data. The processing unit 820 may read the instructions and/or the data in the storage unit, to enable the apparatus to implement actions of different devices in the foregoing method embodiments.

In a possible design, the apparatus 800 may be the first terminal device in the foregoing embodiments, or may be a component (such as a chip) of the first terminal device. The apparatus 800 may implement steps or procedures performed by the first terminal device corresponding to the foregoing method embodiments. The transceiver unit 810 may be configured to perform receiving and sending-related operations of the first terminal device in the foregoing method embodiments. The processing unit 820 may be configured to perform processing-related operations of the first terminal device in the foregoing method embodiments.

In another possible design, the apparatus 800 may be the network device in the foregoing embodiments, or may be a component (such as a chip) of the network device. The apparatus 800 may implement steps or procedures performed by the network device corresponding to the foregoing method embodiments. The transceiver unit 810 may be configured to perform receiving and sending-related operations of the network device in the foregoing method embodiments. The processing unit 820 may be configured to perform processing-related operations of the network device in the foregoing method embodiments.

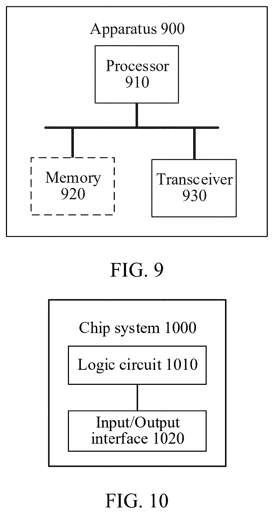

FIG. 9 is a block diagram of a communication apparatus 900 according to an embodiment of this application. The apparatus 900 includes a processor 910, and the processor 910 is coupled to a memory 920. Optionally, the apparatus further includes the memory 920. The memory 920 is configured to store a computer program or instructions and/or data. The processor 910 is configured to execute the computer program or the instructions stored in the memory 920, or read data stored in the memory 920, to perform the method in the foregoing method embodiments.

Optionally, there are one or more processors 910.

Optionally, there are one or more memories 920.

Optionally, the memory 920 and the processor 910 are integrated or disposed separately.

Optionally, as shown in FIG. 9, the apparatus 900 further includes a transceiver 930. The transceiver 930 is configured to receive and/or send a signal. For example, the processor 910 is configured to control the transceiver 930 to receive and/or send a signal.

In a solution, the apparatus 900 is configured to implement an operation performed by the first terminal device in the foregoing method embodiments.

For example, the processor 910 is configured to execute the computer program or the instructions stored in the memory 920, to implement a related operation of the terminal device in the foregoing method embodiments.

In a solution, the apparatus 900 is configured to implement an operation performed by the network device in the foregoing method embodiments.

For example, the processor 910 is configured to execute the computer program or the instructions stored in the memory 920, to implement a related operation of the network device in the foregoing method embodiments.

In an implementation process, steps in the foregoing method may be implemented by using a hardware integrated logical circuit in the processor 910, or by using instructions in a form of software. The method disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 920, and the processor 910 reads information in the memory 920 and completes the steps in the foregoing method in combination with hardware of the processor. To avoid repetition, details are not described herein again.

It should be understood that, in embodiments of this application, the processor may be one or more integrated circuits, and is configured to execute a related program, to perform the method embodiments of this application.

The processor (for example, the processor 910) may include one or more processors and be implemented as a combination of computing devices. The processor may separately include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gate logic, transistor logic, a discrete hardware circuit, a processing circuit, other appropriate hardware or firmware, and/or a combination of hardware and software, and is configured to perform various functions described in this disclosure. The processor may be a general-purpose processor or a dedicated processor. For example, the processor 910 may be a baseband processor or a central processing unit. The baseband processor may be configured to process a communication protocol and communication data. The central processing unit may be configured to enable the apparatus to execute a software program and process data in the software program. In addition, a part of the processor may further include a non-volatile random access memory. For example, the processor may further store information of a device type.

The program in this application is used to represent software in a broad sense. A non-limitative example of the software includes program code, a program, a subprogram, instructions, an instruction set, code, a code segment, a software module, an application program, a software application program, or the like. The program may run in a processor and/or a computer, so that the apparatus performs various functions and/or processes described in this application.

The memory (for example, the memory 920) may store data required by the processor (for example, the processor 910) during software execution. The memory may be implemented by using any appropriate storage technology. For example, the memory may be any available storage medium that can be accessed by a processor and/or a computer. A non-limitative example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable medium, an optical disc memory, a magnetic disk storage medium, a magnetic storage device, a flash memory, a register, a status memory, a remote mounted memory, a local or remote memory component, or any other medium capable of carrying or storing software, data, or information and accessible by the processor/computer. It should be noted that the memory described in this specification is intended to include but is not limited to these memories and any memory of another proper type. The memory (for example, the memory 920) and the processor (for example, the processor 910) may be disposed separately or integrated together. The memory may be configured to connect to the processor, so that the processor can read information from the memory, and store information in and/or write information into the memory. The memory may be integrated into the processor. The memory and the processor may be disposed in an integrated circuit (for example, the integrated circuit may be disposed in a UE or another network node).

FIG. 10 is a block diagram of a chip system 1000 according to an embodiment of this application. The chip system 1000 (or may also be referred to as a processing system) includes a logic circuit 1010 and an input/output interface (input/output interface) 1020.

The logic circuit 1010 may be a processing circuit in the chip system 1000. The logic circuit 1010 may be coupled to and connected to a storage unit, and invoke instructions in the storage unit, to enable the chip system 1000 to implement the methods and functions in embodiments of this application. The input/output interface 1020 may be an input/output circuit in the chip system 1000, and outputs information processed by the chip system 1000, or inputs to-be-processed data or signaling information into the chip system 1000 for processing.

In a solution, the chip system 1000 is configured to implement an operation performed by the first terminal device in the foregoing method embodiments.

For example, the logic circuit 1010 is configured to implement processing-related operations performed by the terminal device in the foregoing method embodiments, and the input/output interface 1020 is configured to implement sending and/or receiving related operations performed by the terminal device in the foregoing method embodiments.

In another solution, the chip system 1000 is configured to implement an operation performed by the network device in the foregoing method embodiments.

For example, the logic circuit 1010 is configured to implement processing-related operations performed by the network device in the foregoing method embodiments, and the input/output interface 1020 is configured to implement sending and/or receiving related operations performed by the terminal device in the foregoing method embodiments.

An embodiment of this application further provides a computer-readable storage medium, where the computer-readable storage medium stores computer instructions for implementing the method performed by the communication apparatus (such as the first terminal device and the network device) in the foregoing method embodiments.

An embodiment of this application further provides a computer program product, including instructions. When the instructions are executed by a computer, the method performed by the communication apparatus (such as the terminal device, the network device, or the positioning server) in the foregoing method embodiments is implemented.

An embodiment of this application further provides a communication system. The communication system includes one or more of the first terminal device, the network device, or the second terminal device in the foregoing embodiments.

For explanations and beneficial effects of related content in any apparatus provided above, refer to the corresponding method embodiment provided above. Details are not described herein again. In the several embodiments provided in this application, it should be understood that the disclosed apparatus and method may be implemented in other manners. For example, the foregoing described apparatus embodiments are only examples. For example, division into the foregoing units is only logical function division, and may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms. The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit. A person of ordinary skill in the art may be aware that, in combination with the examples described in embodiments disclosed in this specification, units and algorithm steps may be implemented by electronic hardware or a combination of computer software and electronic hardware. Whether functions are performed in a hardware or software manner depends on particular applications and design constraint conditions of the technical solutions. A person skilled in the art may use different methods to implement the described functions for each particular application, but it should not be considered that the implementation goes beyond the scope of this application.

When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first terminal device, wherein the method comprises:
sending first information to a network device, wherein the first information comprises an identifier of a second terminal device, and the identifier of the second terminal device corresponds to a first index;
receiving and storing a first sidelink configuration from the network device, wherein the first sidelink configuration corresponds to the first index;
sending second information to the network device, wherein the second information comprises the identifier of the second terminal device, and the identifier of the second terminal device corresponds to a second index;
updating the first index corresponding to the first sidelink configuration to the second index;
receiving a second sidelink configuration from the network device, wherein the second sidelink configuration corresponds to the second index; and
performing sidelink communication with the second terminal device based on the second sidelink configuration.

2. The method according to claim 1, wherein the performing sidelink communication with the second terminal device based on the second sidelink configuration comprises:
determining, based on a timestamp of the second sidelink configuration and a first moment, to perform the sidelink communication with the second terminal device based on the second sidelink configuration, wherein the first moment is a moment at which the second information is generated or sent.

3. The method according to claim 2, wherein the determining, based on a timestamp of the second sidelink configuration and a first moment, to perform the sidelink communication with the second terminal device based on the second sidelink configuration comprises:
if a moment corresponding to the timestamp of the second sidelink configuration is later than the first moment, performing the sidelink communication with the second terminal device based on the second sidelink configuration.

4. The method according to any one of claims 1 to 3, wherein the method further comprises:
when the first sidelink configuration is different from the second sidelink configuration, sending the second sidelink configuration to the second terminal device.

5. The method according to any one of claims 1 to 4, wherein the sidelink configuration comprises a sidelink measurement configuration or a sidelink discontinuous reception DRX configuration.

6. A communication method, applied to a first terminal device, wherein the method comprises:
sending first information to a network device, wherein the first information comprises an identifier of a second terminal device, and the identifier of the second terminal device corresponds to a first index;
receiving and storing a first sidelink configuration from the network device, wherein the first sidelink configuration corresponds to the first index;
sending second information to the network device, wherein the second information comprises the identifier of the second terminal device, and the identifier of the second terminal device corresponds to a second index;
receiving a second sidelink configuration from the network device, wherein the second sidelink configuration corresponds to the second index; and
determining, based on the identifier of the second terminal device, the first sidelink configuration, and the second sidelink configuration, to perform sidelink communication with the second terminal device based on the second sidelink configuration.

7. The method according to claim 6, wherein the determining, based on the identifier of the second terminal device, the first sidelink configuration, and the second sidelink configuration, to perform sidelink communication with the second terminal device based on the second sidelink comprises:
determining, based on the second index corresponding to the second sidelink configuration and the second information, that an identifier of a terminal device corresponding to the second index is the identifier of the second terminal device;
determining the first index based on the determined identifier of the second terminal device and the first information; and
updating the first sidelink configuration to the second sidelink configuration based on the first index, and performing the sidelink communication with the second terminal device based on the second sidelink configuration.

8. The method according to claim 6 or 7, wherein the method further comprises:
determining, based on a timestamp of the second sidelink configuration and a first moment, to perform the sidelink communication with the second terminal device based on the second sidelink configuration, wherein the first moment is a moment at which the second information is generated or sent.

9. The method according to claim 7, wherein the determining, based on a timestamp of the second sidelink configuration and a first moment, to perform the sidelink communication with the second terminal device based on the second sidelink configuration comprises:
if a moment corresponding to the timestamp of the second sidelink configuration is later than the first moment, performing the sidelink communication with the second terminal device based on the second sidelink configuration.

10. The method according to any one of claims 6 to 9, wherein the method further comprises:
when the first sidelink configuration is different from the second sidelink configuration, sending the second sidelink configuration to the second terminal device.

11. The method according to any one of claims 6 to 10, wherein the sidelink configuration comprises a sidelink measurement configuration or a sidelink discontinuous reception DRX configuration.

12. A communication method, applied to a first terminal device, wherein the method comprises:
sending first information to a network device, wherein the first information comprises an identifier of a second terminal device, and the identifier of the second terminal device corresponds to a first index;
receiving and storing a first sidelink configuration from the network device, wherein the first sidelink configuration corresponds to the first index;
sending second information to the network device, wherein the second information comprises the identifier of the second terminal device, and the identifier of the second terminal device corresponds to a second index;
releasing the first sidelink configuration;
receiving a second sidelink configuration from the network device, wherein the second sidelink configuration corresponds to the second index; and
performing sidelink communication with the second terminal device based on the second sidelink configuration.

13. The method according to claim 12, wherein the method further comprises:
receiving first indication information from the network device, wherein the first indication information indicates to remove the first sidelink configuration.

14. The method according to claim 12 or 13, wherein the performing sidelink communication with the second terminal device based on the second sidelink configuration comprises:
determining, based on a timestamp of the second sidelink configuration and a first moment, to perform the sidelink communication with the second terminal device based on the second sidelink configuration, wherein the first moment is a moment at which the second information is generated or sent.

15. The method according to claim 14, wherein the determining, based on a timestamp of the second sidelink configuration and a first moment, to perform the sidelink communication with the second terminal device based on the second sidelink configuration comprises:
if a moment corresponding to the timestamp of the second sidelink configuration is later than the first moment, performing the sidelink communication with the second terminal device based on the second sidelink configuration.

16. The method according to any one of claims 12 to 15, wherein the method further comprises:
when the first sidelink configuration is different from the second sidelink configuration, sending the second sidelink configuration to the second terminal device.

17. The method according to any one of claims 12 to 16, wherein the sidelink configuration comprises a sidelink measurement configuration or a sidelink discontinuous reception DRX configuration.

18. A communication method, wherein the method comprises:
receiving first information from a first terminal device, wherein the first information comprises an identifier of a second terminal device, and the identifier of the second terminal device corresponds to a first index;
sending a first sidelink configuration to the first terminal device, wherein the first sidelink configuration corresponds to the first index;
receiving second information from the first terminal device, wherein the second information comprises the identifier of the second terminal device, and the identifier of the second terminal device corresponds to a second index;
sending first indication information to the first terminal device, wherein the first indication information indicates to remove the first sidelink configuration; and
sending a second sidelink configuration to the first terminal device, wherein the second sidelink configuration is used by the first terminal device to perform sidelink communication with the second terminal device, and the second sidelink configuration corresponds to the second index.

19. The method according to claim 18, wherein the method further comprises:
sending a timestamp of the second sidelink configuration to the first terminal device, wherein the timestamp of the second sidelink configuration is for determining to perform the sidelink communication with the second terminal device based on the second sidelink configuration.

20. The method according to claim 18 or 19, wherein the sidelink configuration comprises a sidelink measurement configuration or a sidelink discontinuous reception DRX configuration.

21. A communication method, wherein the method is applied to a first terminal device, and the method comprises:
sending first information to a network device, wherein the first information comprises an identifier of a second terminal device, and the second terminal device corresponds to a first index;
receiving a first correspondence from the network device, wherein the first correspondence comprises a correspondence between the identifier of the second terminal device and a second index;
receiving and storing a first sidelink configuration from the network device, wherein the first sidelink configuration corresponds to the second index; and
performing sidelink communication with the second terminal device based on the first sidelink configuration.

22. The method according to claim 21, wherein the performing sidelink communication with the second terminal device based on the first sidelink configuration comprises:
determining, based on a timestamp of the first sidelink configuration and a first moment, to perform the sidelink communication with the second terminal device based on the first sidelink configuration, wherein the first moment is a moment at which the first information is generated or sent.

23. The method according to claim 22, wherein the determining, based on a timestamp of the first sidelink configuration and a first moment, to perform the sidelink communication with the second terminal device based on the first sidelink configuration comprises:
if a moment corresponding to the timestamp of the first sidelink configuration is later than the first moment, performing the sidelink communication with the second terminal device based on the first sidelink configuration.

24. The method according to any one of claims 21 to 23, wherein the method further comprises:
when the first sidelink configuration is different from a second sidelink configuration, sending the first sidelink configuration to the second terminal device, wherein the second sidelink configuration corresponds to the first index.

25. The method according to any one of claims 21 to 24, wherein the sidelink configuration comprises a sidelink measurement configuration or a sidelink discontinuous reception DRX configuration.

26. A communication apparatus, wherein the communication apparatus is configured to perform the method according to any one of claims 1 to 25.

27. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 25.

28. A chip, comprising a processor and a communication interface, wherein the communication interface is configured to receive data and/or information, and transmit the received data and/or information to the processor, and the processor processes the data and/or the information to perform the method according to any one of claims 1 to 25.

29. A computer-readable storage medium, wherein the computer-readable storage medium stores computer instructions, and when the computer instructions are run on a computer, the method according to any one of claims 1 to 25 is implemented.

30. A computer program product, wherein the computer program product comprises computer program code, and when the computer program code is run on a computer, the method according to any one of claims 1 to 25 is implemented.

31. A communication system, comprising a first terminal device and a network device, wherein the first terminal device is configured to perform the method according to any one of claims 1 to 5, the method according to any one of claims 6 to 11, the method according to any one of claims 12 to 17, or the method according to any one of claims 21 to 25, and the network device is configured to perform the method according to any one of claims 18 to 20.
